(19) Europäisches Patentamt
European Patent Office
Office européen des brevets

(11) **EP 1 933 097 B1**

(12) **EUROPÄISCHE PATENTSCHRIFT**

(45) Veröffentlichungstag und Bekanntmachung des Hinweises auf die Patenterteilung:
**10.04.2013 Patentblatt 2013/15**

(51) Int Cl.:
***F24D 19/10*** *(2006.01)*

(21) Anmeldenummer: **06025273.1**

(22) Anmeldetag: **07.12.2006**

(54) **Verfahren zum Steuern einer drehzahlregelbaren Heizungsumwälzpumpe**

Method for controlling a variable speed circulation pump for heating system

Procédé de contrôle pour une pompe de circulation de chauffage avec vitesse variable

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**18.06.2008 Patentblatt 2008/25**

(73) Patentinhaber: **Grundfos Management A/S**
**8850 Bjerringbro (DK)**

(72) Erfinder:
• **Vadstrup, Pierre**
**8200 Brabrand (DK)**
• **Skovmose Kallesøe, Carsten**
**8800 Viborg (DK)**

(74) Vertreter: **Vollmann, Heiko et al**
**Vollmann & Hemmer**
**Patentanwälte**
**Wallstrasse 33a**
**23560 Lübeck (DE)**

(56) Entgegenhaltungen:
**EP-A- 1 323 986    EP-A1- 1 323 984**

EP 1 933 097 B1

**Beschreibung**

Die Erfindung betrifft ein Verfahren zum Steuern einer drehzahlregelbaren Heizungsumwälzpumpe in einer Heizungsanlage gemäß den im Oberbegriff des Anspruchs 1 angegebenen Merkmalen. Ein solches Verfahren ist durch Dokument EP-A-1 323 984 schon bekannt.

Bei heute üblichen Heizungsanlagen zählt es zum Stand der Technik, die Vorlauftemperatur außentemperaturgesteuert zu führen und die Raumtemperatur mittels Thermostatventilen zu regeln, welche je nach Stellung des Thermostats den Leitungsquerschnitt mehr oder weniger freigeben, vollständig öffnen oder vollständig verschließen, ggf. unter Beibehaltung eines Bypasses. Zur Funktion dieses Systems ist es erforderlich, dass eine Heizungsumwälzpumpe bei ausreichendem Druck und mit der jeweils erforderlichen Fördermenge fördert, um die Reibungswiderstände innerhalb des Leitungssystems zu überwinden und stets eine ausreichende Versorgung der Heizkörper oder sonstigen Verbraucher mit dem umzuwälzenden Wärmeträger (typischerweise Wasser) sicherzustellen. Moderne Heizungsumwälzpumpen sind mit Drehzahlstellern ausgerüstet, die es ermöglichen, das Pumpenaggregat in weiten Bereichen entsprechend anzusteuern, um einerseits eine ausreichende Förderleistung sicherzustellen, andererseits aber einen möglichst energieeffizienten Einsatz zu erzielen. Solche drehzahlregelbaren Heizungsumwälzpumpen passen sich dabei dem jeweiligen Anforderungsprofil der Heizungsanlage weitgehend selbsttätig an, geeignete Verfahren hierzu zählen zum Stand der Technik. Dennoch kann nicht immer zuverlässig ausgeschlossen werden, dass die Förderleistung der Heizungsumwälzpumpe zumindest zeitweise zu hoch oder auch zu niedrig ist. In ersterem Fall kann dies zu unerwünschter Geräuschentwicklung innerhalb des Heizungssystems führen und stellt darüber hinaus eine unnötige Vergeudung von elektrischer Energie zum Antrieb der Pumpe dar. Im letzteren Fall hingegen besteht, wenn auch nur zeitweise, eine Unterversorgung der Heizungsanlage, da trotz geöffneter Thermostatventile nicht der erforderliche Wärmeträgerstrom gefördert wird.

Vor diesem Hintergrund liegt der Erfindung die Aufgabe zugrunde, ein Verfahren zum Steuern einer drehzahlregelbaren Heizungsumwälzpumpe in einer Heizungsanlage zu schaffen, mit dem mit einfachen Mitteln festgestellt werden kann, ob, wenn auch nur zeitweise, eine Unter- oder Überversorgung der Heizungsanlage mit Wärmeträgermedium vorliegt und dann ggf. korrigierend einzugreifen.

Diese Aufgabe wird gemäß der Erfindung durch das in Anspruch 1 angegebene Verfahren gelöst. Vorteilhafte Ausgestaltungen der Erfindung sind in den Unteransprüchen, der nachfolgenden Beschreibung und der Zeichnung angegeben.

Das erfindungsgemäße Verfahren ist zum Steuern einer drehzahlregelbaren Heizungsumwälzpumpe in einer Heizungsanlage vorgesehen, die beispielsweise mit raumtemperaturgesteuerten Thermostatventilen ausgestattet ist, die den Durchflusswiderstand der Heizungsanlage in Abhängigkeit der Raumtemperatur ändern, also die Rohrnetzkennlinie der Anlage entsprechend dem Wärmebedarf ändern. Bei dem erfindungsgemäßen Verfahren wird der zeitliche Verlauf der Fördermenge oder der zeitliche Verlauf einer mit der Fördermenge verknüpften Größe der Pumpe erfasst und anhand dieser erfassten Größe - die Fördermenge oder eine damit verknüpfte Größe - ermittelt, ob eine ausreichende Versorgung oder eine Unter- oder Überversorgung der Heizungsanlage durch die Pumpe erfolgt, wobei dann, wenn eine Unter- oder eine Überversorgung ermittelt wird, die Pumpe selbsttätig korrigierend angesteuert wird, um auf diese Weise sicherzustellen, dass die Pumpe die Heizungsanlage stets ausreichend versorgt, auch dann, wenn alle Thermostatventile vollständig geöffnet sind. Auf der anderen Seite ist durch das erfindungsgemäße Verfahren auch sichergestellt, dass eine Überversorgung ausgeschlossen ist, beispielsweise dann, wenn sämtliche Thermostatventile geschlossen sind. Bei dem erfindungsgemäßen Verfahren wird entweder die Fördermenge oder eine damit verknüpfte Größe wie beispielsweise die Durchflussgeschwindigkeit oder der Kv-Wert (dies ist die normierte Durchflusskennzahl der Heizungsanlage) erfasst.

Die korrigierende Ansteuerung der Pumpe kann auf unterschiedliche Art erfolgen, beispielsweise durch entsprechende Änderung der Regelkennlinie bzw. durch Veränderung der Pumpenkurve, wie dies bei frequenzumrichtergesteuerten, drehzahlregelbaren Heizungsumwälzpumpen selbsttätig durch die Steuerung/Regelung erfolgen kann.

Gemäß der Erfindung wird der zeitliche Fördermengenverlauf oder der zeitliche Kv-Wertverlauf mit einer vorbestimmten Verlaufscharakteristik verglichen und anhand einer ggf. vorhandenen Abweichungen eine Unter- oder Überversorgung bestimmt. Der Vergleich des zeitlichen Fördermengenverlaufs oder des zeitlichen Kv-Wertverlaufs mit einer vorgenannten Verlaufscharakteristik kann softwaremäßig in die typischerweise bei solchen Pumpen ohnehin vorhandene digitale Steuer- und Regelelektronik implementiert werden.

Als vorbestimmte Verlaufscharakteristik dient typischerweise eine periodische Kurve, wobei ausschließlich der Kurvenverlauf, nicht jedoch die Verschiebung der Kurve auf der vertikalen Achse, die die Fördermenge oder den Kv-Wert repräsentiert, entscheidend ist. Dabei wird die periodische Kurve typischerweise so ausgelegt, dass sie auf der horizontalen Zeitachse in einem 24-Stunden-Intervall eine 360°-Periode durchläuft. Dies entspricht der Dauer eines Tages und einer Nacht unabhängig von der Jahreszeit. Es ist also davon auszugehen, dass auch der zeitliche Fördermengenverlauf, der ermittelt wird, sich nach 24 Stunden wiederholt. Es hat sich erstaunlicherweise gezeigt, dass ein optimierter Förderstrom der Heizungsanlage in 24 Stunden etwa eine Sinusform aufweist, weshalb ein Vergleich mit einem charakteristischen Kurvenverlauf in Form einer Sinuskurve geeignet ist, um festzustellen, ob eine optimale oder eine Unter- oder Überversorgung der Heizungsanlage durch die Pumpe erfolgt.

Dabei wird ein Abweichen des Fördermengenverlaufs von der periodischen, beispielsweise sinusförmigen Kurve in dem Bereich, in dem die Kurve ihr Minimum aufweist, als Überversorgung ausgewertet, wohingegen ein Abweichen des Fördermengenverlaufs von der Kurve in dem Bereich, in dem die Kurve ihr Maximum aufweist, als Unterversorgung ausgewertet wird. In beiden Fällen erfolgt ein drehzahlkorrigierender Steuereingriff, sei es unmittelbar oder über Korrektur der Regelkennlinie. Dabei erfolgen ein drehzahlerhöhender Steuereingriff bei festgestellter Unterversorgung und ein drehzahlsenkender Steuereingriff bei ermittelter Überversorgung.

Anstelle der vorbeschriebenen Auswertung kann gemäß der Erfindung vorteilhaft auch eine Auswertung erfolgen, bei der der Fördermengenverlauf oder eine damit verknüpfte Größe, d. h. der zeitliche Verlauf dieser verknüpften Größe, über eine Periode erfasst wird und die Kurvenform über einen Zeitabschnitt, in dem die maximale Fördermenge liegt, mit der Kurvenform über einen gleich langen Zeitabschnitt, in dem die minimale Fördermenge liegt, verglichen wird. Es kann dann, wenn diese Kurvenformen über ein vorbestimmtes Maß hinaus voneinander abweichen, dies als Kennzeichen für eine Unter- oder Überversorgung der Heizungsanlage herangezogen werden. Da es lediglich auf die Kurvenform ankommt und die Kurve typischerweise periodisch ist, ist beispielsweise bei einer sinusähnlichen Kurve ein Bereich des Kurvenmaximums mit einem Bereich des Kurvenminimums zu vergleichen, wobei es eben nicht auf die Absolutwerte, sondern auf die sich zu einer gedachten Nulllinie ergebenden Relativwerte zum Maximum bzw. zum Minimum hin ankommt, um die Kurvenform in diesem Bereich zu vergleichen. Bei einer ideal sinusförmigen Kurve, die bei 0°, 180° und 360° die Nulllinie schneidet, ist die Kurvenform von 0° - 180° gleich der Kurvenform von 180° - 360°, gleichwohl die Kurvenabschnitte selbst um 180° versetzt zueinander zur Nulllinie spiegelsymmetrisch ausgebildet sind.

Ein auswerttechnisch besonders einfaches Verfahren zur Ermittlung einer Unter- oder Überversorgung ist gemäß einer Weiterbildung der Erfindung dadurch gekennzeichnet, dass die Häufigkeitsverteilung der Fördermengen des Fördermengenverlaufs oder einer damit verknüpften Größe ermittelt und daran eine Unter- oder Überversorgung der Heizungsanlage bestimmt wird. Unter Häufigkeitsverteilung der Fördermengen ist zu verstehen, dass die Fördermenge über einen Zeitabschnitt von beispielsweise fünf Sekunden ermittelt oder gemittelt wird und dann ermittelt wird, wie die Häufigkeitsverteilung dieser Fördermengen pro Zeitabschnitt liegt. Bei einer optimierten Versorgung der Heizungsanlage hat sich gezeigt, dass insbesondere im Bereich der maximalen und minimalen Fördermengen eine im Wesentlichen gleiche Häufigkeitsverteilung auftritt. Ist diese Symmetrie hingegen gestört, so liegt eine Unter- oder Überversorgung durch die Pumpe vor. Dabei kann die Abweichung zwischen der Häufigkeitsverteilung der Fördermengen im Bereich maximaler Fördermengen von der Häufigkeitsverteilung der Fördermengen im Bereich minimaler Fördermengen als Maß für den Grad einer Unter- oder Überversorgung dienen.

Wenn der Betrag der Häufigkeit der Fördermengen pro Zeitabschnitt im Bereich maximaler Fördermengen größer als der im Bereich minimaler Fördermengen ist, wird bei dem erfindungsgemäßen Verfahren eine Unterversorgung der Heizungsanlage festgestellt und entsprechend korrigierend eingegriffen. Ist hingegen der Betrag der Häufigkeit der Fördermengen pro Zeiteinheit im Bereich maximaler Fördermengen kleiner als der im Bereich pro Zeitabschnitt minimaler Fördermengen, so wird dies als Kennzeichen für eine Überversorgung der Heizungsanlage gewertet und entsprechend korrigierend in die Pumpensteuerung eingegriffen.

Das erfindungsgemäße Verfahren wird vorteilhaft so angewandt, dass der zeitliche Verlauf der Fördermenge der Pumpe über ein Zeitintervall von 24 Stunden ermittelt wird und anhand dieses Fördermengenverlaufs ggf. eine Unter- oder Überversorgung festgestellt und dann korrigierend in die Pumpensteuerung eingegriffen wird. Dieses Verfahren kann mehrfach ggf. selbsttätig wiederholt werden um eine möglichst optionale Pumpenversorgung der Anlage zu erzielen. Es kann jedoch auch der Fördermengenverlauf von mehreren solcher 24-Stunden-Intervalle ermittelt und ausgewertet werden, wobei vorzugsweise die Verlaufsermittlung aufeinander folgender Zeitintervalle erfolgt, um systematische Veränderungen zu erfassen.

Anstelle des betragsmäßigen Vergleichs der Häufigkeitsverteilung im Bereich maximaler und minimaler Fördermengen kann gemäß einer Weiterbildung der Erfindung die Fläche unter der Häufigkeitsverteilungskurve für zwei Teilperioden ermittelt und verglichen werden, wobei die Abweichung der Flächen der Teilperioden unter der Häufigkeitsverteilungskurve als Maß für eine Unter- oder Überversorgung der Heizungsanlage herangezogen wird.

Dabei ist gemäß einer Weiterbildung der Erfindung die Bildung der Teilperioden der Häufigkeitsverteilung durch die Fördermenge $Q_T$ bestimmt, welche die Häufigkeitsverteilung einer Periode, die typischerweise vierundzwanzig Stunden erfasst, in zwei Teilperioden teilt. Dabei errechnet sich $Q_T$ wie folgt:

$$Q_T = a \cdot (Q_{max} - Q_{min}) + Q_{min}$$

Hierbei ist $Q_{max}$ die maximale Fördermenge in einer Periode, $Q_{min}$ die minimale Fördermenge in einer Periode und a ein Faktor, der vorzugsweise ½ ist. Mit $Q_T$

wird sozusagen eine Art Nulllinie der Kurve, die den zeitlichen Verlauf der Fördermenge oder einer damit verknüpften Größe darstellt, ermittelt.

Ob eine Unter- oder Überversorgung der Heizungsanlage durch die Pumpe vorliegt, kann gemäß der Erfindung auch dadurch festgestellt werden, dass der arithmetische Mittelwert der über eine Periode geförderten Fördermenge gebildet wird und dass ermittelt wird, ob dieser arithmetische Mittelwert von dem Median des zeitlichen Kurvenverlaufs der Fördermenge abweicht oder nicht. Die Größe einer etwaigen Abweichung wird dann als Maß für eine Unter- oder Überversorgung der Heizungsanlage durch die Pumpe herangezogen werden. Der Median stellt dabei die gedachte Nulllinie der Verlaufskurve der Fördermenge oder einer damit verknüpften Größe dar. Wenn der arithmetische Mittelwert der Fördermenge unter dem Median liegt, wird eine Unterversorgung der Heizungsanlage durch die Pumpe festgestellt, wohingegen dann, wenn der Mittelwert der Fördermenge über dem Median liegt, eine Überversorgung festgestellt wird.

Gemäß der Erfindung kann eine Unter- oder Überversorgung der Heizungsanlage durch die Pumpe bzw. auch die ordnungsgemäße Versorgung alternativ dadurch festgestellt werden, dass der zeitliche Verlauf der Fördermenge oder der zeitliche Verlauf einer damit verknüpften Größe erfasst und einer Frequenzanalyse zugeführt wird, wobei dann anhand der Frequenzanalyse ermittelt wird, ob eine Über- oder Unterversorgung der Heizungsanlage vorliegt. Dabei kann eine Unter- oder Überversorgung der Heizungsanlage bei einer Frequenzanalyse des zeitlichen Verlaufs der Fördermenge oder des zeitlichen Verlaufs einer damit verknüpften Größe dadurch festgestellt werden, dass neben der ermittelten Grundschwingung - dies ist typischerweise eine pro Tag - eine erste und/oder andere überharmonische Schwingung ermittelt werden.

Gemäß einer Weiterbildung der Erfindung kann weiterhin dann, wenn eine solche erste und zweite überharmonische Schwingung ermittelt werden, festgestellt werden, ob es sich um eine Unter- oder eine Überversorgung handelt. Eine Unterversorgung der Heizungsanlage wird festgestellt, wenn die erste überharmonische Schwingung in der Phasenlage um etwa 180° zur Grundschwingung versetzt ist. Eine Überversorgung der Heizungsanlage wird hingegen festgestellt, wenn die erste überharmonische Schwingung zur Grundschwingung in der Phasenlage um etwa 360° versetzt ist.

Die vorstehend beschriebenen Verfahren zur Ermittlung einer Unter- oder Überversorgung bzw. korrekten Versorgung einer Heizungsanlage anhand des zeitlichen Verlaufs der Fördermenge oder des zeitlichen Verlaufs einer damit verknüpften Größe sind nur beispielhaft zu verstehen und stellen keine abschließende Aufzählung dar. Es handelt sich jedoch um solche, die besonders vorteilhaft sind, da sie mit den ohnehin frequenzumrichterseitig vorhandenen digitalen Bausteinen mit vergleichsweise geringem softwaremäßigen Aufwand realisiert werden können.

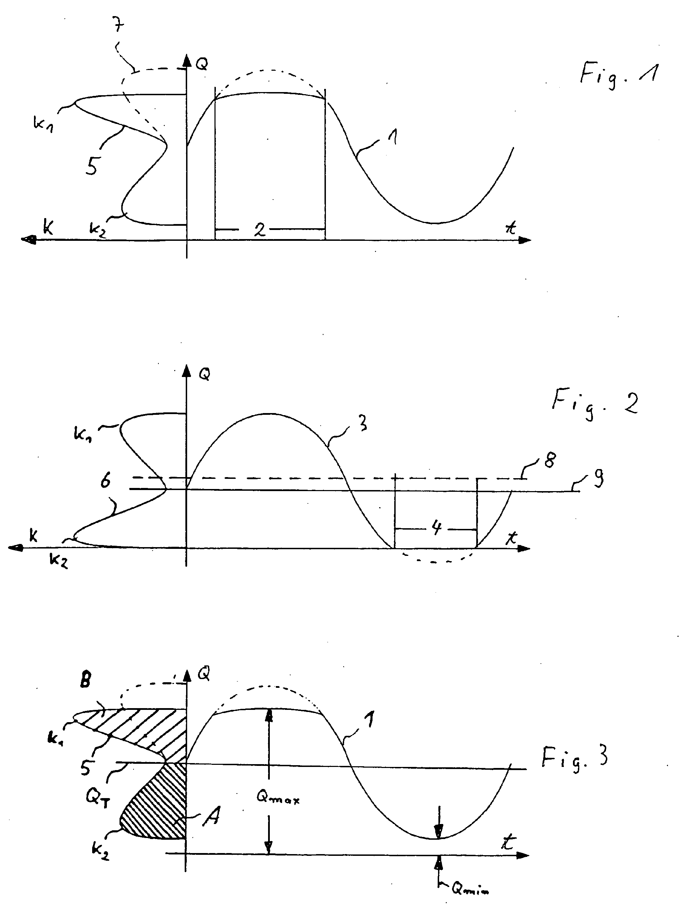

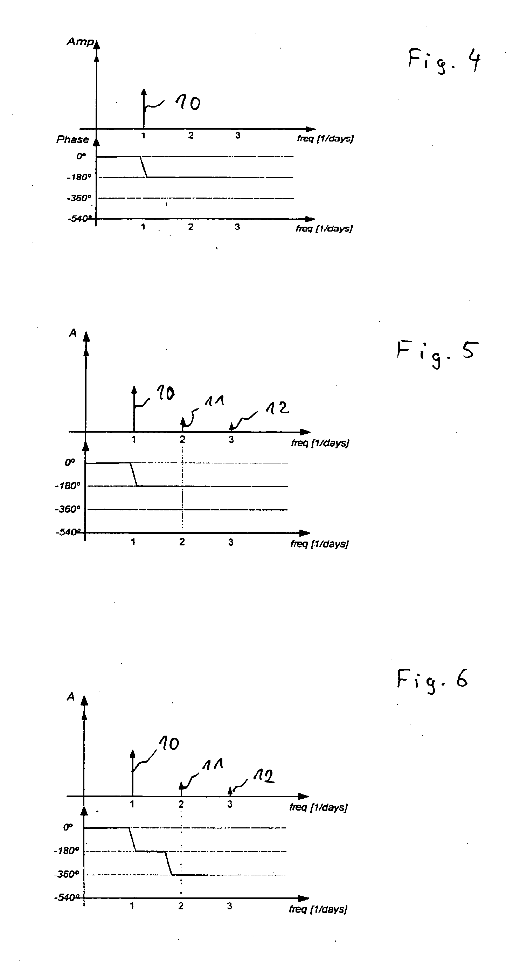

Die Erfindung ist nachfolgend anhand von in der Zeichnung dargestellten Ausführungsbeispielen näher erläutert. Es zeigen Figuren 1, 2 und 3 Kurvenverläufe, bei denen auf der Ordinate die Fördermenge und der Abszisse die Zeit aufgetragen ist, jeweils im rechten oberen Quadranten des dargestellten Koordinatensystems. Im linken oberen Quadranten sind auf der Ordinate Fördermengen pro Zeitabschnitt und auf der Abszisse betragsmäßig die Häufigkeitsverteilung der jeweiligen Fördermengen pro Zeitabschnitt aufgetragen. Die Figuren 4 bis 6 zeigen drei unterschiedliche Ergebnisse einer Frequenzanalyse des zeitlichen Verlaufs der Fördermenge in einer Heizungsanlage.

Anhand der Figuren 1 und 2 sind typische Unterversorgungen (Fig. 1) und Überversorgungen (Fig. 2) einer Heizungsanlage dargestellt. Die dargestellten Kurven im rechten oberen Quadranten der Figuren 1 und 2 repräsentieren ein Zeitintervall von 24 Stunden. Die Kurve 1 in Fig. 1 ist gegenüber einer sinusförmigen Kurve, wie sie in unterbrochenen Linien im linken Teil der Kurve ergänzend dargestellt ist, im Bereich der maximalen Förderhöhen abgeflacht ausgebildet. Dieser abgeflachte Bereich der Kurve 1 ist mit 2 gekennzeichnet. In diesem Bereich ist die Kurve 1 nicht spiegelsymmetrisch zur rechten Halbwelle, weicht also in ihrer Kurvenform von der anderen Halbwelle ab. Die Abflachung bei maximaler Fördermenge zeigt, dass in diesem Bereich entgegen dem optimalen Fördermengenverlauf (sinusförmige Kurve) die Fördermenge nicht in der notwendigen Weise erhöht wurde. Es ist davon auszugehen, dass die Thermostatventile der Heizungsanlage vollständig oder weitgehend geöffnet waren, während die Pumpe mit im Wesentlichen konstanter maximaler Fördermenge gefördert hat, also den Wärmebedarf nicht vollständig bedienen konnte. Um dies zu ermitteln, kann, wie weiter oben dargelegt, entweder die Kurve 1 mit einer vorbestimmten Verlaufscharakteristik, nämlich einer sinusförmigen Kurve verglichen werden, wobei dann festgestellt werden wird, dass im Bereich maximaler Fördermengen die Kurve 1 von einer sinusförmigen Kurve abweicht und diese Abweichung dann als Kennzeichen für eine Unterversorgung der Anlage herangezogen wird, wonach die Heizungsumwälzpumpe entsprechend korrigierend angesteuert wird. Dieses Verfahren kann selbsttätig ablaufen und durch entsprechende Programmierung der bei drehzahlregelbaren Heizungsumwälzpumpen ohnehin vorhandenen digitalen Steuer- und Regelungselektronik erfolgen.

Die in den Figuren im rechten Quadranten dargestellten Kurven stellen die Fördermenge in Abhängigkeit der Zeit dar. Statt der Fördermenge Q kann auch eine damit verknüpfte Größe, wie beispielsweise der Kv-Wert herangezogen werden, welcher in den hier zu betrachtenden Bereichen einen nahezu gleichen Kurvenverlauf aufweist.

Um festzustellen, ob eine Unter- oder Überversorgung vorliegt, genügt es, die Kurvenform des Fördermengenverlaufs im Bereich der maximalen Fördermengen mit der im Bereich minimaler Fördermengen zu vergleichen. Spiegelt man die zu einer gedachten Nulllinie um 180° versetzt liegenden Kurventeile an dieser gedachten Nulllinie, dann kann man die Kurvenform direkt vergleichen. Bei übereinstimmender Kurvenform ergibt sich eine gemeinsame Kurve, wohingegen sich bei nicht übereinstimmenden Kurvenformen zwei voneinander abweichende Kurven ergeben, wie dies in Figur 1 im Bereich 2 durch den in durchgezogener Linie dargestellten Kurvenabschnitt und den in unterbrochener Linie dargestellten Kurvenabschnitt, welcher den um 180° versetzten und an einer gedachten Nulllinie gespiegelten Kurvenabschnitt darstellt, zeigt. Wie die anhand der Figuren 1 und 2 dargestellten Ausführungsbeispiele verdeutlichen, kann anhand der Abweichungen der Kurvenformen voneinander ohne weiteres festgestellt werden, ob eine Unterversorgung oder eine Überversorgung der Heizungsanlage vorliegt.

Anhand von Figur 2 ist dargestellt, wie der zeitliche Verlauf der Fördermenge bei einer Überversorgung der Anlage sich darstellt. Die dort dargestellte Kurve 3 weist einen Bereich 4 auf, in welchem die Kurve vom Sinusverlauf (siehe unterbrochene Linie) abweicht. In diesem Bereich 4 erfolgt keine Förderung der Pumpe, da die Thermostatventile der Heizungsanlage geschlossen sind, bzw. es wird bei minimaler Fördermenge eine im Wesentlichen konstante kleine Fördermenge gefördert. Dies signalisiert eine Überversorgung der Anlage, was in gleicher Weise wie anhand von Figur 1 beschrieben durch Vergleich mit einem charakteristischen Kurvenverlauf, wie beispielsweise einer Sinuskurve, festgestellt wird.

Ein alternatives Verfahren zur Ermittlung einer Unter- oder Überversorgung ist durch Betrachtung der Häufigkeitsverteilung der Fördermengen gegeben. Hierzu wird der zeitliche Verlauf der Fördermenge der Pumpe, wie er beispielsweise durch die Kurve 1 in Figur 1 oder die Kurve 3 in Figur 2 dargestellt ist, in eine Vielzahl von gleichen Zeitabschnitten unterteilt und ermittelt, welche ggf. gemittelte Fördermenge in welchem Zeitabschnitt gefördert wurde. Diese Fördermengen pro Zeitabschnitt werden dann für ein 24-Stunden-Intervall ermittelt, es wird die Häufigkeitsverteilung der Fördermengen pro Zeiteinheit also in einem 24-Stunden-Intervall ermittelt. Diese Häufigkeitsverteilungskurven sind in den Figuren 1 und 2 im linken oberen Quadranten dargestellt. Dabei stellt die Kurve 5 die Häufigkeitsverteilung der Fördermengen pro Zeiteinheit bei einem Fördermengenverlauf gemäß Kurve 1 dar. Die Kurve 6 zeigt entsprechend die Häufigkeitsverteilung der Fördermengen pro Zeiteinheit bei einem Fördermengenverlauf gemäß Kurve 3.

Wie diese beiden Häufigkeitsverteilkurven 5 und 6 zeigen, ist in den Bereichen, in welchen eine Über- oder Unterversorgung der Anlage durch die Pumpe erfolgt, also in den Bereichen 2 und 4, die Häufigkeiten K höher als in den übrigen Bereichen. Dies liegt daran, dass die Pumpe in diesen Bereichen 2 und 4 mit praktisch konstanter Fördermenge fördert und nicht dem bevorzugten sinusförmigen, zeitlichen Verlauf der Fördermenge folgt. Hierdurch ergeben sich in den Kurven für die Häufigkeitsverteilung für den Bereich der minimalen bzw. maximalen Fördermenge hohe Häufigkeiten K, die recht einfach und zuverlässig ermittelt werden können. Entsprechende Rechenalgorithmen, die softwaremäßig in die Steuer- und Regelelektronik implementiert werden können, sind vergleichsweise einfach.

Wenn also der Unterschied der Häufigkeitsverteilung der Fördermengen pro Zeitabschnitt des Fördermengenverlaufs im Bereich minimaler Fördermengen im Vergleich zu den maximalen Fördermengen besonders groß ist (Figur 2), dann ist dies ein Kennzeichen für Überversorgung der Anlage, wohingegen im umgekehrten Fall (Figur 1) dies ein Kennzeichen für die Unterversorgung ist. In Figur 1 ist nur beispielhaft durch den in unterbrochenen Linien dargestellten Kurvenverlauf 7 gezeigt, wie die Häufigkeitsverteilung aussähe, wenn eine optimale Versorgung, nämlich mit einer im zeitlichen Verlauf sich sinusförmig ändernden Fördermenge aussähe.

Ob eine Unter- oder Überversorgung der Heizungsanlage vorliegt, kann jedoch auch, wie anhand von Figur 2 dargestellt, dadurch ermittelt werden, dass zunächst einmal der zeitliche Verlauf der Fördermenge über eine Periode ermittelt wird, also indem gemäß Figur 2 die Kurve 3 erfasst wird. Es wird dann der arithmetische Mittelwert der Fördermenge während dieser Periode ermittelt. Dieser Mittelwert ist in Figur 2 durch die unterbrochene Linie 8 dargestellt. Es wird weiterhin der Median 9 der Kurve 3 ermittelt, wonach durch Vergleich festgestellt wird, ob der arithmetische Mittelwert 8 mit dem Median 9 übereinstimmt oder nicht. Liegt eine Übereinstimmung vor, dann ist der Kurvenverlauf der Kurve 3 symmetrisch, d. h. es liegt weder eine Unter- noch eine Überversorgung, sondern eine bestimmungsgemäße Versorgung der Heizungsanlage durch die Pumpe vor. Weicht hingegen der arithmetische Mittelwert 8 vom Median 9 ab, so ist noch zu ermitteln, ob er größer oder kleiner als der Median ist. Liegt der arithmetische Mittelwert 8 über dem Median 9, ist er also größer als der Median, dann liegt eine Überversorgung der Heizungsanlage vor, wie dies bei dem in Figur 2 dargestellten arithmetischen Mittelwert 8 der Fall ist. Im umgekehrten Fall hingegen, wenn der arithmetische Mittelwert unter dem Median 9 liegt, also kleiner ist, dann liegt eine Unterversorgung der Heizungsanlage vor.

Anhand von Figur 3, deren Kurven 1, 5 identisch mit denen in Figur 1 sind, wird eine weitere Methode zur Ermittlung einer Über- oder Unterversorgung der Heizungsanlage erläutert. Auch hier wird die Häufigkeitsverteilung der Fördermengen, wie sie durch den zeitlichen Verlauf gemäß Kurve 1 bestimmt und durch die Kurve 5 dargestellt ist, ermittelt. Auch hier ist also der zeitliche Verlauf der Fördermengen über eine Periode zu erfassen, wobei die Häufigkeitsverteilungskurve 5 ermittelt und im Weiteren ein Wert $Q_T$ ermittelt wird, der zum Beispiel wie folgt bestimmt wird:

$$Q_T = a \cdot (Q_{max} - Q_{min}) + Q_{min}$$

Hierbei sind $Q_{max}$ die maximale Fördermenge während der Periode, $Q_{min}$ die minimale Fördermenge während der Periode und a ein Faktor, der typischerweise ½ ist. Auf diese Weise wird ein Wert $Q_T$ ermittelt, welcher sowohl den zeitlichen Verlauf der Fördermenge gemäß Kurve 1 während einer Periode in zwei Teilperioden unterteilt als auch eine solche Unterteilung hinsichtlich der Häufigkeitsverteilungskurve 5 bildet. Es wird dann die Fläche unter den dadurch gebildeten Teilperioden der Häufigkeitsverteilungskurve 5 ermittelt und miteinander verglichen. Diese Flächen sind in Figur 3 mit A (eng schraffierte Fläche) und B (grob schraffierte Fläche) gekennzeichnet. Wenn die Flächen A und B gleich groß sind, liegt eine optimale Versorgung der Heizungsanlage durch die Pumpe vor. Ist die Fläche B größer als die Fläche A, dann liegt eine Unterversorgung vor, wohingegen im umgekehrten Fall eine Überversorgung festgestellt wird.

Die vorstehend beschriebenen Auswertmethoden können grundsätzlich durch die Ermittlung des zeitlichen Verlaufs der Fördermenge während einer Periode, typischerweise vierundzwanzig Stunden erfolgen. Es können jedoch auch Auswertungen über mehrere solcher Perioden erfolgen. Bei einer weiteren Auswertmethode ist zwingend eine Auswertung über mindestens drei Perioden erforderlich. Es handelt sich hierbei um die Methode der Frequenzanalyse.

Anhand von Figur 4 ist ein Auswertdiagramm einer solchen Frequenzanalyse dargestellt, welches sich bei einer optimal versorgten Heizungsanlage ergibt. Wie das Diagramm zeigt, ist lediglich eine Grundschwingung 10 ermittelt worden.

In den Diagrammen gemäß Figur 5 und Figur 6 sind neben der Grundschwingung 10 darüber hinaus eine erste überharmonische Schwingung 11 und eine zweite überharmonische Schwingung 12 ermittelt worden. Wenn eine solche erste oder eine andere überharmonische Schwingung bei der Frequenzanalyse ermittelt wird, ist dies ein Zeichen dafür, dass die Heizungsanlage von der Pumpe nicht optimal versorgt wird, sondern dass eine Unter- oder Überversorgung vorliegt. Um Letzteres festzustellen, ist die Phasenlage der überharmonischen Schwingung zur Grundschwingung 10 zu ermitteln. Bei einer Unterversorgung ist die erste überharmonische Schwingung um 180° zur Grundschwingung 10 versetzt. Bei einer Überversorgung hingegen, wie sie in Figur 6 dargestellt ist, beträgt der Phasenunterschied zwischen der ersten überharmonischen Schwingung 11 und der Grundschwingung 10 etwa 360°, wohingegen bei einer Unterversorgung dieser Unterschied lediglich etwa 180° beträgt. Es kann also anhand der Phasenlage ermittelt werden, ob eine Über- oder Unterversorgung vorliegt.

**Patentansprüche**

1. Verfahren zum Steuern einer drehzahlregelbaren Heizungsumwälzpumpe in einer Heizungsanlage, deren Durchflusswiderstand in Abhängigkeit der Raumtemperatur veränderlich ist, bei dem der zeitliche Verlauf der Fördermenge (1, 3) oder einer mit der Fördermenge verknüpften Größe der Pumpe erfasst wird und anhand der erfassten Größe ermittelt wird, ob eine ausreichende Versorgung oder eine Unter- oder Überversorgung der Heizungsanlage durch die Pumpe erfolgt, wobei bei einer ermittelten Unter- oder Überversorgung die Pumpe selbsttätig korrigierend angesteuert wird, **dadurch gekennzeichnet, dass** der zeitliche Fördermengenverlauf oder, wenn die mit der Fördermenge verknüpfte Größe der Kv-Wert der Heizungsanlage ist, der Kv-Wertverlauf mit einer vorbestimmten Verlaufscharakteristik verglichen wird und dass anhand einer gegebenenfalls vorhandenen Abweichung eine Unter- oder Überversorgung bestimmt wird.

2. Verfahren nach einem der vorhergehenden Ansprüche, **dadurch gekennzeichnet, dass** die vorbestimmte Verlaufscharakteristik eine periodische Kurve ist.

3. Verfahren nach Anspruch 2, **dadurch gekennzeichnet, dass** die periodische Kurve über ein Vierundzwanzigstundenintervall eine 360°-Periode durchläuft.

4. Verfahren nach einem der vorhergehenden Ansprüche, **dadurch gekennzeichnet, dass** die vorbestimmte Verlaufscharakteristik eine Sinuskurve ist.

5. Verfahren nach einem der vorhergehenden Ansprüche, **dadurch gekennzeichnet, dass** ein Abweichen des Fördermengenverlaufs (1, 3) von einer periodischen, insbesondere sinusförmigen Kurve in dem Bereich, in dem die Kurve ihr Minimum aufweist, als Überversorgung ausgewertet wird.

6. Verfahren nach einem der vorhergehenden Ansprüche, **dadurch gekennzeichnet, dass** ein Abweichen des Fördermengenverlaufs (1, 3) von einer periodischen, insbesondere sinusförmigen Kurve in dem Bereich, in dem die Kurve ihr Maximum aufweist, als Unterversorgung ausgewertet wird.

7. Verfahren nach einem der vorhergehenden Ansprüche, **dadurch gekennzeichnet, dass** der Fördermengenverlauf oder eine damit verknüpfte Größe über eine Periode erfasst wird, und die Kurvenform über einen Zeitabschnitt, in dem die maximale Fördermenge liegt, mit der Kurvenform über einen Zeitabschnitt, in dem die minimale Fördermenge liegt, verglichen wird, und dass eine Abweichung der Kurvenformen über ein vorbestimmtes Maß hinaus als Unter- oder Überversorgung der Heizungsanlage bestimmt wird.

8. Verfahren nach einem der vorhergehenden Ansprüche, **dadurch gekennzeichnet, dass** die Häufigkeitsverteilung (5, 7) der Fördermengen pro Zeiteinheit des Fördermengenverlaufs oder einer damit verknüpften Größe ermittelt und daran eine Unter- oder Überversorgung der Heizungsanlage bestimmt wird.

9. Verfahren nach einem der vorhergehenden Ansprüche, **dadurch gekennzeichnet, dass** der Betrag der Häufigkeit $K_1$ der Fördermengen im Bereich maximaler Fördermengen pro Zeiteinheit mit dem Betrag der Häufigkeit $K_2$ der Fördermengen pro Zeiteinheit im Bereich minimaler Fördermengen verglichen wird und dass eine Abweichung als Maß für den Grad einer Unter- oder Überversorgung herangezogen wird.

10. Verfahren nach Anspruch 9, **dadurch gekennzeichnet, dass** dann, wenn der Betrag der Häufigkeit $K_1$ der Fördermengen pro Zeiteinheit im Bereich maximaler Fördermengen größer als der Betrag der Häufigkeit $K_2$ im Bereich minimaler Fördermengen ist, eine Unterversorgung der Heizungsanlage festgestellt wird (Fig. 1).

11. Verfahren nach Anspruch 9, **dadurch gekennzeichnet, dass** dann, wenn der Betrag der Häufigkeit $K_1$ der Fördermengen im Bereich maximaler Fördermengen kleiner als der Betrag der Häufigkeit $K_2$ im Bereich minimaler Fördermengen ist, eine Überversorgung der Heizungsanlage festgestellt wird (Fig. 2).

12. Verfahren nach einem der vorhergehenden Ansprüche, **dadurch gekennzeichnet, dass** der zeitliche Verlauf der Fördermenge oder einer damit verknüpften Größe der Pumpe über ein Zeitintervall von mindestens 24 Stunden oder mehrer solcher vorzugsweise aufeinander folgender Zeitintervalle erfasst und ausgewertet wird.

13. Verfahren nach einem der vorhergehenden Ansprüche, **dadurch gekennzeichnet, dass** der zeitliche Verlauf der Fördermenge oder einer damit verknüpften Größe der Pumpe erfasst wird, dass die Fläche (A, B) unter der die Häufigkeitsverteilung bestimmenden Kurve für zwei Teilperioden ermittelt und verglichen wird, wobei die Abweichung der Flächen (A, B) der Teilperioden als Maß für eine Unter- oder Überversorgung der Heizungsanlage herangezogen wird.

14. Verfahren nach Anspruch 13, **dadurch gekennzeichnet, dass** die Teilperioden der Häufigkeitsverteilung durch eine Fördermenge $Q_T$ bestimmt ist, welche die Häufigkeitsverteilung einer Periode in zwei Teilperioden teilt, wobei

$$Q_T = a \, (Q_{max} - Q_{min}) + Q_{min}$$

ist, wobei
$Q_{max}$- die maximale Fördermenge in einer Periode,
$Q_{min}$ - die minimale Fördermenge in einer Periode und
a - ein Faktor, vorzugsweise ½ ist.

15. Verfahren nach einem der vorhergehenden Ansprüche, **dadurch gekennzeichnet, dass** der arithmetische Mittelwert (8) der über eine Periode geförderten Fördermenge gebildet wird und dass eine Abweichung dieses Mittelwertes (8) von dem Median (9) des zeitlichen Kurvenverlaufs (3) der Fördermenge als Maß für eine Unter- oder Überversorgung der Heizungsanlage herangezogen wird.

16. Verfahren nach Anspruch 15, **dadurch gekennzeichnet, dass** dann, wenn der Mittelwert der Fördermenge unter dem Median (9) liegt, eine Unterversorgung festgestellt wird.

17. Verfahren nach Anspruch 15, **dadurch gekennzeichnet, dass** dann, wenn der Mittelwert (8) der Fördermenge über dem Median (9) liegt, eine Überversorgung festgestellt wird.

18. Verfahren nach einem der vorhergehenden Ansprüche, **dadurch gekennzeichnet, dass** der zeitliche Verlauf der Fördermenge (1, 3) oder einer damit verknüpften Größe einer Frequenzanalyse zugeführt wird und anhand der Frequenzanalyse ermittelt wird, ob eine Über- oder Unterversorgung der Heizungsanlage vorliegt.

19. Verfahren nach Anspruch 18, **dadurch gekennzeichnet, dass** eine Über- oder Unterversorgung dadurch festgestellt wird, dass neben der ermittelten Grundschwingung (10) eine erste und/oder eine andere überharmonische Schwingung (11, 12) ermittelt werden.

20. Verfahren nach Anspruch 19, **dadurch gekennzeichnet, dass** dann, wenn die erste überharmonische Schwingung (11) in der Phasenlage zur Grundschwingung (10) um einen vorbestimmten Winkel, vorzugsweise etwa 180° versetzt ist, eine Unterversorgung der Heizungsanlage festgestellt wird.

21. Verfahren nach Anspruch 19, **dadurch gekennzeichnet, dass** dann, wenn die erste überharmonische Schwingung (11) in der Phasenlage zur Grundschwingung (10) um einen vorbestimmten Winkel, vorzugsweise etwa 360° versetzt ist, eine Überversorgung der Heizungsanlage festgestellt wird.

## Claims

1. A method for controlling a speed-controllable heating circulation pump in a heating installation, whose throughput resistance is changeable depending on the room temperature, with which the temporal course of the delivery rate (1, 3) or a variable of the pump linked to the delivery rate is acquired, and it is determined by way of the acquired variable, as to whether an adequate supply, or an undersupply or oversupply of the heating installation by the pump is effected, wherein with a determined undersupply or oversupply, the pump is automatically activated in a corrective manner, **characterised in that** the temporal course of the delivery rate or, if the variable linked to the delivery rate is the Kv-value of the heating installation, the Kv-value course is compared to a predefined course characteristic, and that an undersupply or an oversupply is determined by way of a deviation which is present as the case may be.

2. A method according to one of the preceding claims, **characterised in that** the predefined course characteristic is a periodic curve.

3. A method according to claim 2, **characterised in that** the periodic curve runs through a 360° -period over a twenty-four hour interval.

4. A method according to one of the preceding claims, **characterised in that** the predefined course characteristic is a sine curve.

5. A method according to one of the preceding claims, **characterised in that** a deviation of the delivery rate course (1, 3) from a periodic, in particular sinusoidal curve in the region, in which the curve has its minimum, is assessed as an oversupply.

6. A method according to one of the preceding claims, **characterised in that** a deviation of the delivery rate course (1, 3) from a periodic, in particular sinusoidal curve in the region, in which the curve has its maximum, is assessed as an undersupply.

7. A method according to one of the preceding claims, **characterised in that** the delivery rate course or a variable linked thereto, is acquired over a period, and the curve shape over a time interval, in which the maximal delivery rate lies, is compared to the curve shape over a time interval, in which the minimal delivery rate lies, and that a deviation of the curve shapes beyond a certain measure is evaluated as an undersupply or oversupply of the heating installation.

8. A method according to one of the preceding claims, **characterised in that** the frequency distribution (5, 7) of the delivery rates per time unit of the delivery rate course or a variable linked thereto, is acquired, and subsequently an undersupply or oversupply of the heating installation is determined.

9. A method according to one of the preceding claims, **characterised in that** the magnitude of the frequency $K_1$ of the delivery rates in the region of the maximal delivery rates per time unit is compared to the magnitude of the frequency $K_2$ of the delivery rates per time unit in the region of minimal delivery rates, and that a deviation is used as a measure for the degree of undersupply or oversupply.

10. A method according to claim 9, **characterised in that** an undersupply of the heating installation is ascertained when the magnitude of the frequency $K_1$ of the delivery rates per time unit in the region of maximal delivery rates is larger than the magnitude of the frequency $K_2$ in the region of minimal delivery rates (Fig. 1).

11. A method according to claim 9, **characterised in that** an oversupply of the heating installation is ascertained when the magnitude of the frequency $K_1$ of the delivery rates in the region of maximal delivery rates is smaller than the magnitude of the frequency $K_2$ in the region of minimal delivery rates (Fig. 2).

12. A method according to one of the preceding claims, **characterised in that** the temporal course of the delivery rate or a variable of the pump linked thereto, is acquired over a time interval of at least 24 hours or over several such time intervals which are preferably consecutive, and evaluated.

13. A method according to one of preceding claims, **characterised in that** the temporal course of the delivery rate or a variable of the pump linked thereto is acquired, that the area (A, B) below the curve determining the frequency distribution is evaluated for two part periods and compared, wherein the deviation of the areas (A, B) of the part periods is used as a measure for an undersupply or oversupply of the heating installation.

14. A method according to claim 13, **characterised in that** the part periods of the frequency distribution is determined by a delivery rate $Q_T$ which divides the frequency distribution of a period into two part periods, wherein

$$Q_T = a \left( Q_{max} - Q_{min} \right) + Q_{min}$$

wherein

$Q_{max}$ - is the maximal delivery rate in a period,
$Q_{min}$ - the minimal delivery rate in a period is and
a - a factor which is preferably ½.

**15.** A method according to one of the preceding claims, **characterised in that** the arithmetic mean (8) of the delivery rate delivered over a period is formed, and that a deviation of this mean (8) from the median (9) of the temporal curve course (3) of the delivery rate is used as a measure for an undersupply or an oversupply of the heating installation.

**16.** A method according to claim 15, **characterised in that** an undersupply is ascertained when the mean of the delivery rate lies below the median (9).

**17.** A method according to claim 15, **characterised in that** an oversupply is ascertained when the mean (8) of the delivery rate lies above the median (9).

**18.** A method according to one of the preceding claims, **characterised in that** the temporal course of the delivery rate (1, 3) or a variable linked thereto is led to a frequency analysis, and it is determined by way of the frequency analysis, as to whether an oversupply or an undersupply of the heating installation is present.

**19.** A method according to claim 18, **characterised in that** an oversupply or undersupply is ascertained **in that** a first and/or another ultra-harmonic oscillation (11, 12) are determined apart from the determined fundamental oscillation (10).

**20.** A method according to claim 19, **characterised in that** an undersupply of the heating installation is ascertained when the first ultra-harmonic oscillation (11) is offset by a predefined certain angle, preferably about 180°, in phase position to the fundamental oscillation (10).

**21.** A method according to claim 19, **characterised in that** an oversupply of the heating installation is ascertained when the first ultra-harmonic oscillation (11) is offset by a predefined certain angle, preferably about 360°, in phase position to the fundamental oscillation (10).

**Revendications**

**1.** Procédé de commande d'une pompe de circulation de chauffage à vitesse réglable dans une installation de chauffage, dont la résistance à l'écoulement est variable en fonction de la température ambiante, dans lequel est détectée l'évolution temporelle du débit (1, 3) ou d'une grandeur de la pompe liée au débit, la grandeur détectée permettant de déterminer si l'installation de chauffage est suffisamment alimentée ou est sous-alimentée ou suralimentée par la pompe, et dans lequel, si une sous-alimentation ou une suralimentation est détectée, la pompe est commandée pour opérer une correction automatique, **caractérisé en ce que** l'évolution temporelle du débit ou, lorsque la grandeur liée au débit est la valeur Kv de l'installation de chauffage, l'évolution de la valeur Kv est comparée à une courbe caractéristique prédéterminée et **en ce qu'**un écart éventuel constaté permet de déterminer une sous-alimentation ou une suralimentation.

**2.** Procédé selon l'une des revendications précédentes, **caractérisé en ce que** la courbe caractéristique prédéterminée est une courbe périodique.

**3.** Procédé selon la revendication 2, **caractérisé en ce que** la courbe périodique parcourt une période de 360° sur un intervalle de vingt-quatre heures.

**4.** Procédé selon l'une des revendications précédentes, **caractérisé en ce que** la courbe caractéristique prédéterminée est une courbe sinusoïdale.

**5.** Procédé selon l'une des revendications précédentes, **caractérisé en ce qu'**un écart de la courbe de débit (1, 3) par rapport à une courbe périodique, en particulier sinusoïdale, est évalué comme une suralimentation dans la plage dans laquelle la courbe présente son minimum.

**6.** Procédé selon l'une des revendications précédentes, **caractérisé en ce qu'**un écart de la courbe de débit (1, 3) par rapport à une courbe périodique, en particulier sinusoïdale, est évalué comme une sous-alimentation dans la plage dans laquelle la courbe présente son maximum.

**7.** Procédé selon l'une des revendications précédentes, **caractérisé en ce que** la courbe de débit ou une grandeur connexe est détectée sur une période, et la forme de la courbe sur une période dans laquelle se situe le débit maximal est comparée à la forme de la courbe sur une période dans laquelle se situe le débit minimal, et **en ce qu'**une divergence des formes de courbe au-delà d'une cote prédéterminée est définie en tant que sous-alimentation ou suralimentation de l'installation de chauffage.

**8.** Procédé selon l'une des revendications précédentes, **caractérisé en ce que** l'on détermine la distribution de fréquence (5, 7) des débits par unité de temps de la courbe de débit ou d'une grandeur connexe et que l'on définit ainsi une sous-alimentation ou une suralimentation de l'installation de chauffage.

9. Procédé selon l'une des revendications précédentes, **caractérisé en ce que** la valeur de la fréquence $K_1$ des débits dans la plage de débits maximum par unité de temps est comparée à la valeur de la fréquence $K_2$ des débits par unité de temps dans la plage de débits minimum, et **en ce qu'**un écart est utilisé comme mesure du degré d'une sous-alimentation ou d'une suralimentation.

10. Procédé selon la revendication 9, **caractérisé en ce qu'**ensuite, lorsque la valeur de la fréquence $K_1$ des débits par unité de temps dans la plage de débits maximum est supérieure à la valeur de la fréquence $K_2$ dans la plage de débits minimum, on constate une sous-alimentation de l'installation de chauffage (Fig. 1).

11. Procédé selon la revendication 9, **caractérisé en ce qu'**ensuite, lorsque la valeur de la fréquence $K_1$ des débits dans la plage de débits maximum est inférieure à la valeur de la fréquence $K_2$ dans la plage de débits minimum, on constate une suralimentation de l'installation de chauffage (Fig. 2).

12. Procédé selon l'une des revendications précédentes, **caractérisé en ce que** l'évolution temporelle du débit ou d'une grandeur connexe de la pompe est détectée et évaluée sur un intervalle de temps d'au moins 24 heures ou sur plusieurs intervalles de ce type, de préférence successifs.

13. Procédé selon l'une des revendications précédentes, **caractérisé en ce que** l'évolution temporelle du débit ou d'une grandeur connexe de la pompe est détectée, **en ce que** la surface (A, B) située au-dessous de la courbe définissant la distribution de fréquence est déterminée et comparée pour deux périodes partielles, l'écart des surfaces (A, B) des périodes partielles servant à mesurer la sous-alimentation ou la suralimentation de l'installation de chauffage.

14. Procédé selon la revendication 13, **caractérisé en ce que** les périodes partielles de la distribution de fréquence sont déterminées par un débit QT qui divise la distribution de fréquence d'une période en deux périodes partielles, où

$$Q_T = a\,(Q_{max} - Q_{min}) + Q_{min}$$

où

$Q_{max}$ est le débit maximum durant une période,
$Q_{min}$ est le débit minimum durant une période, et
a est un coefficient, de préférence ½.

15. Procédé selon l'une des revendications précédentes, **caractérisé en ce que** l'on forme la moyenne arithmétique (8) du débit de refoulement sur une période et **en ce qu'**on utilise un écart de cette valeur moyenne (8) par rapport à la médiane (9) de l'évolution temporelle (3) de la courbe de débit pour mesurer une sous-alimentation ou une suralimentation de l'installation de chauffage.

16. Procédé selon la revendication 15, **caractérisé en ce que**, lorsque la valeur moyenne du débit se situe au-dessous de la médiane (9), on constate une sous-alimentation.

17. Procédé selon la revendication 15, **caractérisé en ce que**, lorsque la valeur moyenne (8) du débit se situe au-dessus de la médiane (9), on constate une suralimentation.

18. Procédé selon l'une des revendications précédentes, **caractérisé en ce que** l'évolution temporelle du débit (1, 3) ou d'une grandeur connexe est soumise à une analyse de fréquence et **en ce que** l'on détermine, à l'aide de l'analyse de fréquence, la présence ou non d'une sous-alimentation ou d'une suralimentation de l'installation de chauffage.

19. Procédé selon la revendication 18, **caractérisé en ce qu'**une suralimentation ou une sous-alimentation est constatée en déterminant, outre la composante fondamentale (10) déterminée, une première et/ou une autre oscillation surharmonique (11, 12).

20. Procédé selon la revendication 19, **caractérisé en ce qu'**ensuite, lorsque la première oscillation surharmonique (11) est en décalage de phase d'un angle prédéterminé par rapport à la composante fondamentale (10), de préférence d'environ 180°, on constate une sous-alimentation de l'installation de chauffage.

21. Procédé selon la revendication 19, **caractérisé en ce qu'**ensuite, lorsque la première oscillation surharmonique (11) est en décalage de phase d'un angle prédéterminé par rapport à la composante fondamentale (10), de préférence d'environ 360°, on constate une suralimentation de l'installation de chauffage.

Fig. 1

Fig. 2

Fig. 3

Fig. 4

Fig. 5

Fig. 6

**IN DER BESCHREIBUNG AUFGEFÜHRTE DOKUMENTE**

**In der Beschreibung aufgeführte Patentdokumente**

- EP 1323984 A